# EUROPÄISCHE PATENTSCHRIFT

(11) **EP 2 885 108 B1**
(45) Veröffentlichungstag und Bekanntmachung des Hinweises auf die Patenterteilung: **11.10.2017**
(21) Anmeldenummer: 13731337.5
(22) Anmeldetag: 25.06.2013
(51) Int. Cl.: B23Q 1/25, B23Q 7/00, B23Q 16/00, B66F 7/00

(54) **HUBVORRICHTUNG MIT KNIEHEBELGETRIEBE**
LIFTING APPARATUS HAVING A TOGGLE LEVER MECHANISM
DISPOSITIF DE LEVAGE AVEC MÉCANISME À GENOUILLÈRE

(30) Priorität: 20.08.2012 DE 102012107611
(43) Veröffentlichungstag der Anmeldung: 24.06.2015
(73) Patentinhaber: Walter Maschinenbau GmbH, 72072 Tübingen (DE)
(72) Erfinder: SCHINDLER, Daniel, 71093 Schönbuch (DE); KÜMMERLE, Simon, 72119 Ammerbuch (DE)
(74) Vertreter: Rüger, Barthelt & Abel
(86) Internationale Anmeldenummer: PCT/EP2013/063246
(87) Internationale Veröffentlichungsnummer: WO 2014/029529

(56) Entgegenhaltungen:
- EP-A1- 2 565 147
- WO-A1-2004/002872
- GB-A- 831 541
- US-A- 3 642 250
- US-A- 3 904 853

## Beschreibung

Die Erfindung betrifft eine Hubvorrichtung mit einem in Hubrichtung zwischen einer Arbeitsstellung und einer Ruhestellung bewegbaren Hubteil. An dem Hubteil ist eine Stützeinheit und/oder eine Spanneinheit zum Abstützen bzw. zum Einspannen eines Werkstücks angeordnet. Die Stützeinheit kann beispielsweise eine Lünette zum Abstützen eines zylindrischen Werkstücks sein. Die Spanneinheit kann beispielsweise einen Reitstock oder ein ähnliches Spannmittel aufweisen, um ein Werkstück insbesondere axial zu spannen. Die Hubvorrichtung dient vorzugsweise zur Verwendung in Schleifmaschinen beim Schleifen von zylindrischen Werkstücken.

Ein Hubtisch ist beispielsweise aus DE 7016784 U1 bekannt. Der Hubtisch weist eine Tischplatte, ein Basisteil und eine Hebelanordnung mit vier gelenkig zu einem geschlossenen Kreis aneinander gelagerten Hebeln auf. Eines der Gelenke der Hebelanordnung ist an der Tischplatte und das gegenüberliegende Gelenk an dem Basisteil angeordnet. Die anderen Gelenke sind freie Gelenke. Zumindest ein Kniehebelgetriebe wird über einen Antrieb betätigt, um die Tischplatte gegenüber dem Basisteil zu heben bzw. zu senken. Eine Schubstange des Antriebs verbindet das Kniegelenk des Kniehebelgetriebes mit den freien Gelenken der Hebelanordnung.

Der Antrieb wird dabei zwischen dem Basisteil und der Tischplatte durch die Hebelanordnung getragen und beim Bewegen der Tischplatte in Hubrichtung mitbewegt. Dies ist deswegen ungünstig, weil die Masse des Antriebs vollständig mitbewegt werden muss. Es hat sich außerdem gezeigt, dass das Anfahren der Arbeitsstellung bei derartigen Hubtischen für viele Anwendungen zu ungenau ist. Insbesondere bei der Abstützung oder beim Einspannen von Werkstücken in Präzisionsmaschinen muss die Arbeitsstellung des Hubteils der Hubvorrichtung auf wenige Mikrometer genau eingestellt werden können.

EP 2 565 147 A1 beschreibt eine Vorrichtung zur Verwendung mit einer Hebebühne. Um Bodenöffnungen abzudecken, ist eine Vorrichtung in jeder Bodenöffnung vorhanden, die eine durch einen Kniehebelmechanismus abgestützte Platte vorhanden. Die Platte deckt die Bodenöffnung ab und kann durch eine große Kraft einer Hebebühne gegen die Vorspannkraft des Kniehebelmechanismus nach unten in die Bodenöffnung gedrückt werden. Eine Werkstückabstützung ist nicht beschrieben.

Aus DE 29 13 506 A1 ist eine Hubvorrichtung mit einem in einer Hubrichtung zwischen einer Arbeitsstellung und einer Ruhestellung bewegbaren Hubteil bekannt. An einem Basisteil ist eine Antriebseinrichtung angeordnet, die ein Kniehebelgetriebe und einen mit dem Kniehebelgetriebe gekoppelten Spreizbolzen aufweist. Das Kniehebelgetriebe weist einen gelenkig mit dem Hubteil verbundenen ersten Kniehebel und einen gelenkig mit dem Basisteil verbundenen zweiten Kniehebel auf, die an einem Kniegelenk miteinander verbunden sind. Zwischen dem Basisteil und dem Hubteil sind Zugfedern vorhanden, die das Hubteil in die Ruhestellung zum Basisteil hin ziehend beaufschlagen.

Weitere Hubvorrichtungen mit Kniehebelgetrieben sind beispielsweise aus US 3 904 853 A, GB 831 541 A, US 3 642 250 A, EP 0 330 054 A1, DE 36 04 255 A1 und DE 10 2006 006 467 A1 bekannt.

Es kann daher als Aufgabe der vorliegenden Erfindung angesehen werden eine Hubvorrichtung zu schaffen, die eine hohe Genauigkeit beim Anfahren der Arbeitsstellung des in einer Hubrichtung bewegten Hubteils erreicht.

Diese Aufgabe wird durch die Hubvorrichtung mit den Merkmalen des Patentanspruches 1 gelöst.

Die Hubvorrichtung weist eine an einem Basisteil angeordnete Antriebseinrichtung auf. Zu der Antriebseinrichtung gehört ein mit einem Kniehebelgetriebe gekoppelter Antrieb. Ein erster Kniehebel des Kniehebelgetriebes ist am Hubteil und der andere Kniehebel des Kniehebelgetriebes ist am Basisteil angelenkt. Vorzugsweise beaufschlagt der Antrieb das Kniegelenk des Kniehebelgetriebes. Über eine Positioniereinrichtung wird die Arbeitsstellung des Hubteils vorgegeben. Insbesondere definiert die Positioniereinrichtung den maximalen Abstand zwischen dem Hubteil und dem Basisteil, so dass beim Bewegen des Hubteils in Hubrichtung vom Basisteil weg die Arbeitsstellung exakt angefahren werden kann. Um das Hubteil genau in der gewünschten Arbeitsstellung zu halten, ist die Positioniereinrichtung gegenüber dem Kniehebelgetriebe so justiert bzw. eingestellt, dass sich die Kniehebel außerhalb ihrer Strecklage befinden, wenn das Hubteil die Arbeitsstellung erreicht hat. Insbesondere wird die Strecklage der Kniehebel während der gesamten Bewegung zwischen der Ruhestellung und der Arbeitsstellung des Hubteils nicht erreicht. Der Kniegelenkwinkel zwischen den beiden Kniehebeln beträgt in der Ruhestellung vorzugsweise 30° bis 40° und in der Arbeitsstellung vorzugsweise 170° bis 178°.

Dadurch, dass die Kniehebel des Kniehebelgetriebes in der Arbeitsstellung einen Kniegelenkwinkel von kleiner als 180° einschließen, kann über den Antrieb der wenigstens einen Antriebseinrichtung über das Kniehebelgetriebe eine ausreichend große Kraft auf das Hubteil in Hubrichtung ausgeübt werden, so dass es exakt in die durch die Positioniereinrichtung definierte Position gedrückt wird. Auf diese Weise ist die Arbeitsstellung des Hubteils unabhängig von einem Spiel in der Antriebseinrichtung exakt erreicht.

Vorzugsweise besteht das Kniehebelgetriebe der wenigstens einen Antriebseinrichtung aus nur zwei Kniehebeln, wobei jeder Kniehebel insbesondere geradlinig zwischen zwei Lagerstellen verläuft. Das Kniehebelgetriebe weist daher neben dem Kniegelenk bevorzugt nur zwei weitere Lagerstellen auf.

Die Positioniereinrichtung hat eine dem Hubteil zugewandte Anschlagfläche, die in der Arbeitsstellung an einer Anlagefläche des Hubteils anliegt. Die Positioniereinrichtung hat eine Säule, die sich ausgehend vom Basisteil durch eine Aussparung im Hubteil erstreckt und an ihrem dem Basisteil abgewandten Ende ein Anschlagteil mit der Anschlagfläche trägt. Vorzugsweise gelangen die Anschlagfläche und die Anlagefläche nur in der Arbeitsstellung miteinander in Kontakt. Außerhalb der Arbeitsstellung beeinflusst die Positioniereinrichtung die Lage des Hubteils vorzugsweise nicht. Die Positioniereinrichtung und das Hubteil sind insbesondere aus Stahl hergestellt. Die Arbeitsstellung lässt sich dabei besonders genau definieren.

Es ist von Vorteil, wenn die Positioniereinrichtung eine Einstelleinrichtung zur Einstellung des Abstandes zwischen dem Basisteil und der Anschlagfläche aufweist. Auf diese Weise kann die Arbeitsstellung des Hubteils eingestellt und an die Anforderungen der Werkzeugmaschine angepasst werden. Zur exakten Einstellung kann die Einstelleinrichtung eine Differenzialschraube aufweisen. Über diese Differenzialschraube kann beispielsweise ein Anschlagteil der Positioniereinrichtung, an dem die Anschlagfläche vorhanden ist, relativ zu einer mit dem Basisteil verbundenen Säule der Positioniereinrichtung in Hubrichtung in der gewünschten Position eingestellt werden.

Zur Fixierung der Position der Anschlagfläche kann eine quer zur Differenzialschraube angeordnete Spannschraube dienen, die die Differenzialschraube beaufschlagt und gegen eine versehentliche Drehung sichert.

Bei einer bevorzugten Ausführungsform ist an der Anschlagfläche und/oder an der Anlagefläche wenigstens ein Positioniervorsprung vorhanden, der mit einer zugeordneten Positioniervertiefung an der jeweils anderen Fläche zusammenarbeitet. Der Positioniervorsprung und/oder die Positioniervertiefung kann im Querschnitt gesehen prismenförmig sein, beispielsweise dreieckförmig oder trapezförmig. Dabei kann die Anlagefläche und die Anschlagfläche ausschließlich durch die jeweiligen Schrägflächen des wenigstens einen Positioniervorsprungs bzw. der jeweils zugeordneten Positioniervertiefung gebildet sein.

Insbesondere greift der wenigstens eine Positioniervorsprung in die jeweils zugeordnete Positioniervertiefung ein, wenn sich das Hubteil in seiner Arbeitsstellung befindet. Dadurch kann das Hubteil quer oder radial zur Hubrichtung gesehen in einer exakten definierten Position gegenüber der Positioniereinrichtung positioniert werden. Über die Antriebseinrichtung quer zur Hubrichtung in das Hubteil eingeleitete Kräfte können dadurch von der Positionierreinrichtung abgestützt werden. Eine zum verschiebbaren Führen des Hubteils in Hubrichtung gegebenenfalls vorhandene Führungseinrichtung bleibt daher querkraftfrei, wenn die Antriebseinrichtung das Hubteil in die Arbeitsstellung drückt.

Über den wenigstens einen Positioniervorsprung und die wenigstens eine zugeordnete Positioniervertiefung kann eine spielfreie mikrometergenaue Positionierung des Hubteils in der Arbeitsstellung erfolgen. Insbesondere liegen in der Arbeitsstellung des Hubteils ausschließlich die Schrägflächen des wenigstens einen Positioniervorsprungs der Anschlagfläche und/oder der Anlagefläche an den zugeordneten Schrägflächen der wenigstens einen Positioniervertiefung der jeweils anderen Fläche an. Die Arbeitsstellung des Hubteils lässt sich wiederholbar auf einen Mikrometer genau anfahren.

Bei einer Ausführungsform können mehrere Antriebseinrichtungen, beispielsweise zwei Antriebseinrichtungen vorhanden sein. Jede der Antriebseinrichtungen weist einen Antrieb und ein Kniehebelgetriebe auf, wobei die Antriebseinrichtungen prinzipiell gleich aufgebaut sind. Die Kniehebelgetriebe der beiden Antriebseinrichtungen können beispielsweise auf zwei entgegengesetzten Seiten der Positioniereinrichtung bzw. der Säule der Positioniereinrichtung angeordnet sein. Dadurch kann eine gute Kraftverteilung bzw. Krafteinleitung erreicht werden. Die Antriebe der mehreren Antriebseinrichtungen können parallel geschaltet sein, so dass die Summe der Antriebskräfte aller Antriebe über alle Kniehebelgetriebe weitergeleitet wird.

Die Antriebseinrichtung kann entweder einen ansteuerbaren Antrieb oder auch einen manuell bedienbaren Antrieb aufweisen. Der ansteuerbare Antrieb hat den Vorteil, dass das Hubteil während des Betriebs der Werkzeugmaschine bzw. während der Bearbeitung eines Werkstücks automatisiert zwischen der Ruhestellung und der Arbeitsstellung bewegt werden kann. Bei einem bevorzugten Ausführungsbeispiel kann der ansteuerbare Antrieb von einem doppelt wirkenden Fluidzylinder gebildet sein. Vorzugsweise wird ein Pneumatikzylinder verwendet. Die Kolbenstange des Fluidzylinders kann am Kniegelenk des Kniehebelgetriebes angreifen. Das Zylindergehäuse des Fluidzylinders kann dabei schwenkbar am Basisteil gelagert sein. Die Verwendung von Luft zur Betätigung des Fluidzylinders ist unproblematisch, da die Luft zwar kompressibel ist, jedoch die Arbeitsstellung des Hubteils durch die Positioniereinrichtung exakt definiert eingehalten werden kann, wenn der Pneumatikzylinder das Hubteil über das Kniehebelgetriebe in die Arbeitsstellung drückt. Wegen des relativ großen Kniegelenkwinkels von über 170° und vorzugsweise über 175° ist die Kraft, mit der das Hubteil in die Arbeitsstellung und insbesondere gegen die Anschlagfläche gedrückt wird ausreichend groß.

Beim Bewegen des Hubteils aus der Ruhestellung in die Arbeitsstellung nimmt die Geschwindigkeit des Hubteils ab, wenn die Kolbenstange des Fluidzylinders gleichförmig bewegt wird. Dies hat den Vorteil, dass die Arbeitsstellung mit einer sich reduzierenden Hubgeschwindigkeit erreicht und ein sanfterer Stopp des Hubteils in der Arbeitsstellung durch die Positioniereinrichtung erreicht ist. Zusätzlich können in den mit dem Fluidzylinder verbundenen Fluidleitungen eine oder mehrere Drosseln angeordnet sein, um die Bewegungsgeschwindigkeit der Kolbenstange zu begrenzen. Die Steuerung der Bewegung der Kolbenstange erfolgt über den Druck an einer Fluidsteuereinheit, die beispielsweise Bestandteil der Maschinensteuerung ist.

Die wenigstens eine Antriebseinrichtung kann außerdem eine Fluidsteuereinheit aufweisen, die dazu eingereichtet ist, den Fluidzylinder bzw. die betreffende Arbeitskammer eines Fluidzylinders auch dann mit einem Fluiddruck zu beaufschlagen, wenn sich das Hubteil in der Arbeitstellung oder in der Ruhestellung befindet. Dadurch ist sichergestellt, dass das Hubteil mit einer ausreichend großen Kraft in der Arbeitsstellung bzw. der Ruhestellung gehalten und eine genaue Positionierung erreicht ist.

Die Fluidsteuereinheit kann, wenn mehrere Antriebseinrichtungen vorgesehen sind, als gemeinsame Fluidsteuereinheit für alle Antriebseinrichtungen ausgeführt sein.

Es ist außerdem vorteilhaft, wenn die wenigstens eine Antriebseinrichtung eine Sensoreinheit zur Erfassung der Arbeitsstellung und/oder der Ruhestellung aufweist. Beispielsweise kann der doppelt wirkende Fluidzylinder Endlagenschalter aufweisen.

Es ist ferner von Vorteil, wenn ein Hilfsantrieb zusätzlich zu der wenigstens einen Antriebseinrichtung vorhanden ist. Der Hilfsantrieb weist insbesondere einen deformierbaren Körper auf, der beispielsweise von einer Schraubenfeder, einer Blattfeder, einem Elastomerkörper oder dergleichen gebildet sein kann. In der Ruhestellung des Hubteils ist der deformierbare Körper, beispielsweise die Feder, deformiert und vorzugsweise zusammengedrückt und übt daher eine Hilfskraft auf das Hubteil oder ein mit dem Hubteil verbundenes Element aus. Die Hilfskraft beaufschlagt bzw. drückt das Hubteil aus der Ruhelage heraus in Hubrichtung. Über diese Hilfskraft des Hilfsantriebs wird das Bewegen des Hubteils aus der Ruhelage heraus unterstütz. Aufgrund des kleinen Kniegelenkwinkels in der Ruhestellung ist die von der wenigstens einen Antriebseinrichtung in Hubrichtung bewirkte Hubkraft klein, so dass durch den Antrieb der Antriebseinrichtung eine erhebliche Gesamtkraft erzeugt werden müsste, um eine ausreichende Hubkraft zu erreichen. Dies kann jedoch zu unerwünscht großen Beanspruchungen führen. Derart große Gesamtkräfte des Antriebs können durch das Vorsehen des Hilfsantriebs verringert werden.

Bevorzugt wird die Hilfskraft nicht nur in der Ruhestellung, sondern in jeder Position des Hubteils bereitgestellt. Die Hilfskraft kann in der Ruhestellung den größten Betrag aufweisen und mit zunehmender Entfernung bzw. Bewegung des Hubteils zur Arbeitsstellung hin abnehmen.

Bei einer bevorzugten Ausführungsform der Hubvorrichtung ist das Hubteil über eine Führungseinrichtung in Hubrichtung linear geführt. Beispielsweise kann die Führungseinrichtung eine oder mehrere geradlinig in Hubrichtung verlaufende Führungsschienen aufweisen. Die Führungsschienen sind vorzugsweise auf der der Antriebseinrichtung entgegengesetzten Seite des Hubteils angeordnet.

Vorteilhafte Ausgestaltungen der Erfindung ergeben sich aus den abhängigen Patentansprüchen und der Beschreibung. Die Beschreibung beschränkt sich auf wesentliche Merkmale der Erfindung. Die Zeichnung ist ergänzend heranzuziehen. Nachfolgend werden Ausführungsbeispiele der Hubvorrichtung anhand der beigefügten Zeichnung näher erläutert. Es zeigen:
Figur 1 ein Ausführungsbeispiel einer Hubvorrichtung in perspektivischer Darstellung, wobei sich das Hubteil in seiner Arbeitsstellung befindet,
Figur 2 das Ausführungsbeispiel der Hubvorrichtung aus Figur 1 in einer Seitenansicht,
Figur 3 das Ausführungsbeispiel der Hubvorrichtung gemäß der Figuren 1 und 2 in einer Seitenansicht, wobei sich das Hubteil in seiner Ruhestellung befindet,
Figur 4 eine Detaildarstellung der Lagerstellen des Kniehebelgetriebes einer Antriebseinrichtung der Hubvorrichtung gemäß der Figuren 1 bis 3,
Figur 5 eine Detaildarstellung eines Anschlagteils eines Ausführungsbeispiels einer Positioniereinrichtung der Hubvorrichtung gemäß der Figuren 1 bis 3,
Figur 6 eine perspektivische Ansicht auf eine einer Anschlagfläche der Positioniereinrichtung zugeordnete Anlagefläche am Hubteil und
Figur 7 eine Schnittdarstellung durch ein Ausführungsbeispiel einer Positioniereinrichtung mit einer Einstelleinrichtung.

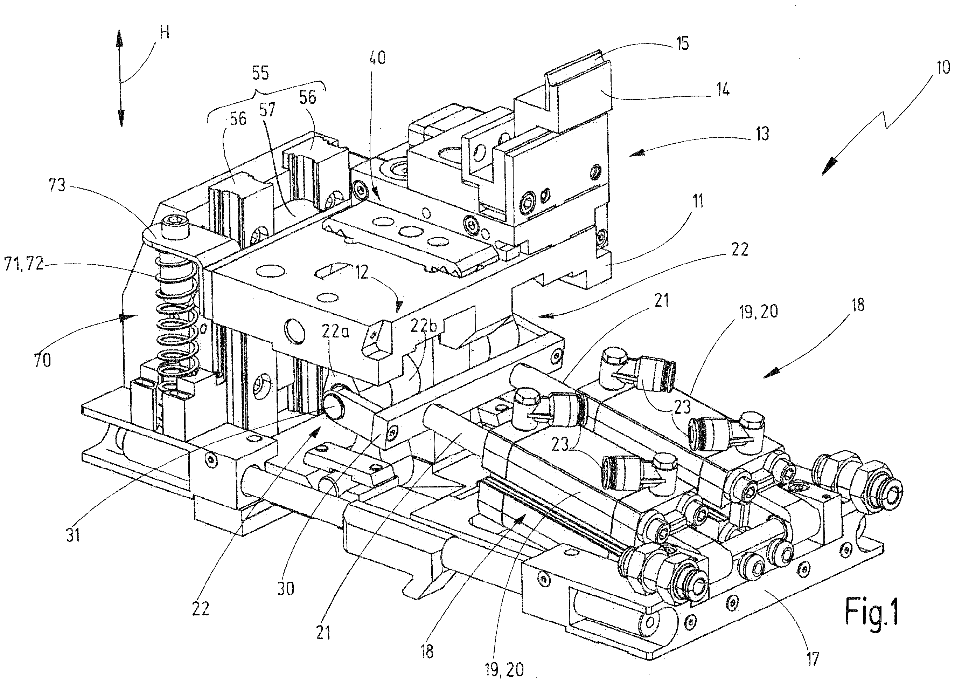

In den Figuren 1 bis 3 ist eine Hubvorrichtung 10 mit einem in einer Hubrichtung H bewegbaren Hubteil 11 dargestellt. Das Hubteil 11 ist plattenförmig ausgeführt. Es weist eine Anbringungsfläche 12 auf, auf der eine Stützeinheit 13 - wie beim hier dargestellten Ausführungsbeispiel - und/oder eine Spanneinheit befestigt werden kann. Die Stützeinheit 13 weist ein Stützteil 14 mit einer Stützvertiefung 15 auf, die im Querschnitt gewölbt oder prismenförmig ausgeführt sein kann. In der Stützausnehmung 15 kann ein nicht näher dargestelltes Werkstück in seiner axialen Erstreckungsrichtung teilweise umgriffen und abgestützt werden. Auf diese Weise können axial einseitig in einem Spannfutter eingespannte Werkstücke durch die Stützeinheit 13 bei der Bearbeitung in axialem Abstand vom Spannfutter abgestützt werden, um ein Durchbiegen zu vermeiden.

In Abwandlung zum dargestellten Ausführungsbeispiel könnte auch eine Spanneinheit mit einem Reitstock oder ähnlichem an dem Hubteil 11 angeordnet sein. Über die Spanneinheit kann beispielsweise ein freies axiales Ende eines Werkstücks axial gegen ein Spannfutter eingespannt sein. Die Spanneinheit kann hierfür quer zur Hubrichtung H antreibbar bzw. verschiebbar auf dem Hubteil 11 gelagert sein. Alternativ oder zusätzlich kann auch die gesamte Hubvorrichtung in einer Spannrichtung verschiebbar gelagert sein.

Auf der der Anbringungsfläche 12 entgegengesetzten Seite weist das Hubteil 11 eine Antriebsseite 16 auf, die einem Basisteil 17 zugewandt ist. Das Basisteil 17 ist beim Ausführungsbeispiel als Basisplatte ausgeführt. An dem Basisteil 17 ist wenigstens eine Antriebseinrichtung 18 zum Bewegen des Hubteils 11 in Hubrichtung H angeordnet. Bei dem hier beschriebenen Ausführungsbeispiel sind zwei gleichartig aufgebaute Antriebseinrichtungen 18 vorhanden. Jede Antriebseinrichtung 18 weist einen Antrieb 19 auf, der beispielsgemäß von einem doppelt wirkenden Fluidzylinder 20 gebildet ist. Jeder Fluidzylinder 20 weist zwei mit Druckluft beaufschlagbare Arbeitskammern auf, die durch den Kolben voneinander fluidisch getrennt sind. Mit dem Kolben ist eine Kolbenstange 21 verbunden, die an einem Ende aus dem Zylindergehäuse herausragt. Das freie Ende der Kolbenstange 21 ist mit einem Kniehebelgetriebe 22 gekoppelt und greift beispielsgemäß an einem Kniegelenk 31 des Kniehebelgetriebes 22 an. Auf diese Weise kann der Fluidzylinder 20 durch Ausfahren und Einfahren der Kolbenstange 21 über das Kniehebelgetriebe das Hubteil 11 in Hubrichtung H bewegen.

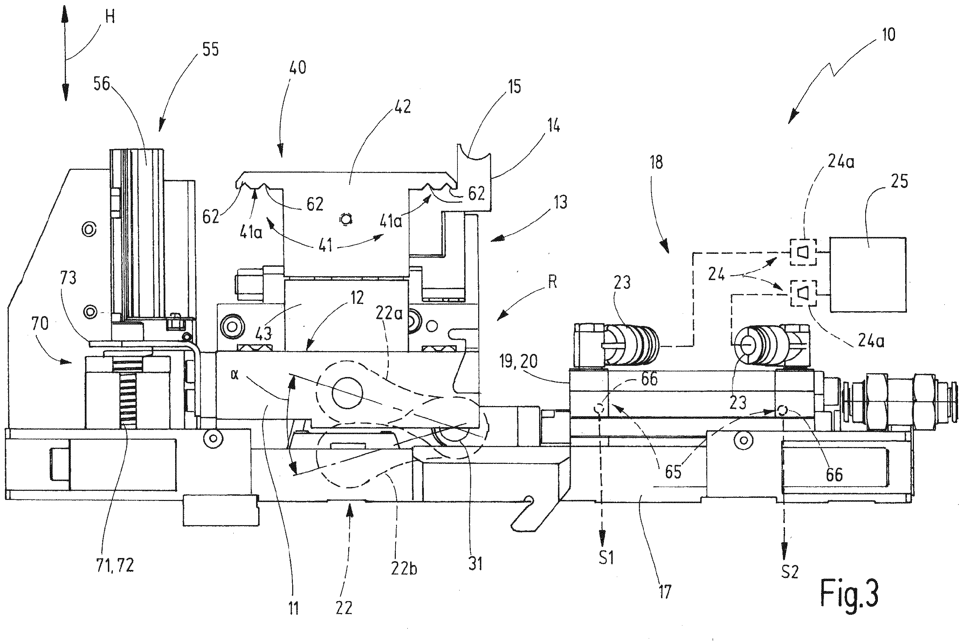

Zur Beaufschlagung der Arbeitskammern weist jeder Fluidzylinder 20 zwei Fluidanschlüsse 23 auf. Die Fluidanschlüsse sind über in Figur 3 schematisch dargestellte Fluidleitungen 24 mit einer Fluidsteuereinheit 25 verbunden. Über die Fluidsteuereinheit 25 wird Fluiddruck in die eine oder die andere Arbeitskammer des doppelt wirkenden Fluidzylinders 20 gespeist. Das Zylindergehäuse ist an dem dem freien Ende der Kolbenstange 21 entgegengesetzten Ende schwenkbar am Basisteil 17 gelagert.

Anstelle der pneumatischen Fluidzylinder 20 könnten alternativ auch Hydraulikzylinder vorgesehen sein. Als Antrieb 19 für die Antriebseinrichtung 18 können alternativ zu den hier beschriebenen Zylindern auch andere ansteuerbare Antriebe 19, beispielsweise Elektromotoren, Linearmotoren oder dergleichen dienen. Es ist ferner auch möglich, anstelle eines ansteuerbaren Antriebs 19 einen manuell betätigten Antrieb vorzusehen und mit dem zugeordneten Kniehebelgetriebe 22 zu koppeln. Dies kann beispielsweise eine Bedienhebelanordnung sein.

Wie insbesondere in Figur 1 zu erkennen ist, sind die beiden Antriebe 19 sozusagen parallel geschaltet, so dass die Antriebskraft jedes Antriebs 19 jeweils beide Kniehebelgetriebe 22 beaufschlagt. Beispielsgemäß ist hierfür ein Verbindungsstück 30 vorhanden, das die beiden freien Enden der Kolbenstangen 21 miteinander verbindet und mit beiden Kniegelenken 31 der Kniehebelgetriebe gekoppelt ist.

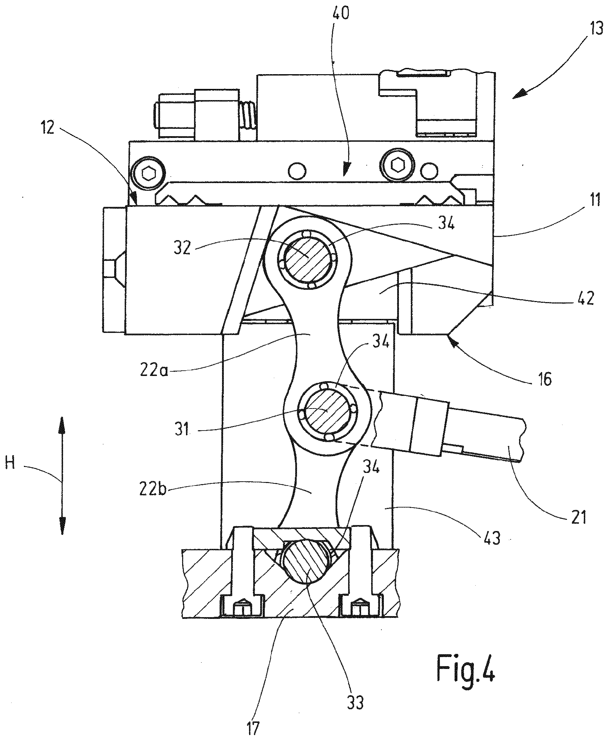

Das Kniehebelgetriebe 22 einer Antriebseinrichtung 18 weist einen gelenkig mit dem Hubteil 11 verbundenen ersten Kniehebel 22a sowie einen gelenkig am Basisteil 17 gelagerten zweiten Kniehebel 22b auf. Die beiden Kniehebel 22a, 22b eines Kniehebelgetriebes 22 sind an dem Kniegelenk 31 gelenkig aneinander gelagert. Somit weist jedes Kniehebelgetriebe 22 drei Lagerstellen auf. Zur Lagerung des ersten Kniehebels 22a dient eine von der Antriebsseite 16 des Hubteils 11 zumindest abschnittweise zugängliche erste Achse 32, die am Hubteil 11 befestigt ist. Die erste Achse 32 dient vorzugsweise zur gelenkigen Lagerung beider ersten Kniehebel 22a der beiden Kniehebelgetriebe 22. In Hubrichtung H unterhalb der ersten Achse 32 ist am Basisteil 17 eine zweite Achse 33 gelagert und zumindest abschnittweise zugänglich. Die zweite Achse 33 dient beim Ausführungsbeispiel zur gelenkigen Lagerung der beiden zweiten Kniehebel 22b am Basisteil 17. Die drei Lagerstellen des Kniehebelgetriebes 22 sind in Figur 4 veranschaulicht. An jeder Lagerstelle weist das Kniehebelgetriebe 22 ein Nadellager 34 auf. Die Nadellager 34 sind gegenüber der Umgebung abgedichtet, beispielsweise mit Radial-Wellendichtringen.

Die Kniehebel 22a, 22b verbinden ihre beiden Lagerstellen jeweils geradlinig. Sie haben eine im Wesentlichen knochenförmige Gestalt.

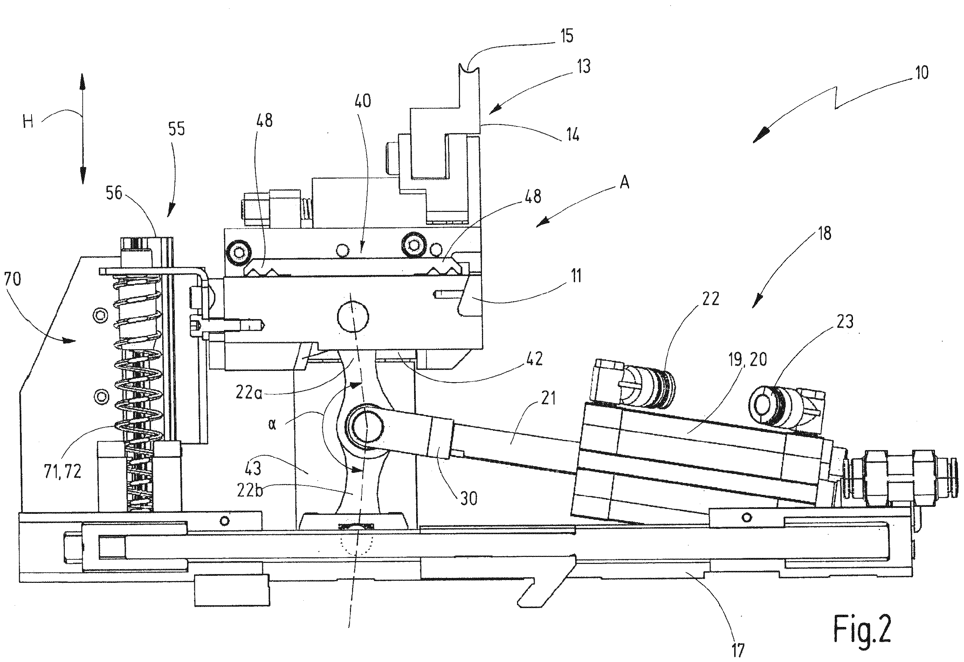

Die beiden Antriebseinrichtungen 18 bewegen das Hubteil 11 zwischen einer Ruhestellung R (Figur 3) und einer Arbeitsstellung A (Figur 2). In der Ruhestellung R weist das Hubteil 11 den geringsten Abstand zum Basisteil 17 auf und liegt beispielsgemäß am Basisteil 17 an. In dieser Ruhestellung R beträgt der zwischen den beiden Längsachsen der Kniehebel 22a, 22b gebildete Kniegelenkwinkel α etwa 30° bis 35°. Die Längsachse der Kolbenstange 21 bildet in der Ruhestellung R die Winkelhalbierende des Kniegelenkwinkels α. Die Kolbenstange 21 erstreckt sich in der Ruhestellung R des Hubteils 11 in etwa rechtwinklig zur Hubrichtung H.

Da sich der Abstand des Kniegelenks 31 gegenüber dem Basisteil 17 bei der Bewegung des Hubteils 11 aus der Ruhestellung R in die Arbeitsstellung A vergrößert, sind die Fluidzylinder 20 mit ihrem Zylindergehäuse schwenkbar am Basisteil 17 gelagert. Durch das Ausfahren der Kolbenstange 21 richten sich die Kniehebel 22a, 22b auf und der dazwischen eingeschlossene Kniegelenkwinkel α wird größer. In der Arbeitsstellung A hat der Kniegelenkwinkel α seinen Maximalwert und ist kleiner als 180°. Die Kniehebel 22a, 22b nehmen also auch in der Arbeitsstellung A nicht ihre Strecklage (Kniegelenkwinkel α = 180°) ein. Der Kniegelenkwinkel α ist im gesamten Bewegungsbereich des Hubteils 11 von der Ruhestellung R in die Arbeitsstellung A stets kleiner als 180°. Beim Ausführungsbeispiel beträgt der Kniegelenkwinkel α in der Arbeitsstellung A etwa 175° bis 178°.

Die Arbeitsstellung A des Hubteils 11 wird durch eine Positioniereinrichtung 40 vorgegeben. Die Positioniereinrichtung 40 bestimmt dabei den maximalen Abstand zwischen dem Hubteil 11 und dem Basisteil 17.

Bei dem hier beschriebenen Ausführungsbeispiel weist die Positioniereinrichtung eine dem Hubteil 11 und beispielsgemäß der Anbringungsfläche 12 zugewandte Anschlagfläche 41 auf. Die Anschlagfläche 41 ist beim Ausführungsbeispiel an einem Anschlagteil 42 vorhanden. Das Anschlagteil 42 ist an einer Säule 43 der Positioniereinrichtung 40 angeordnet.

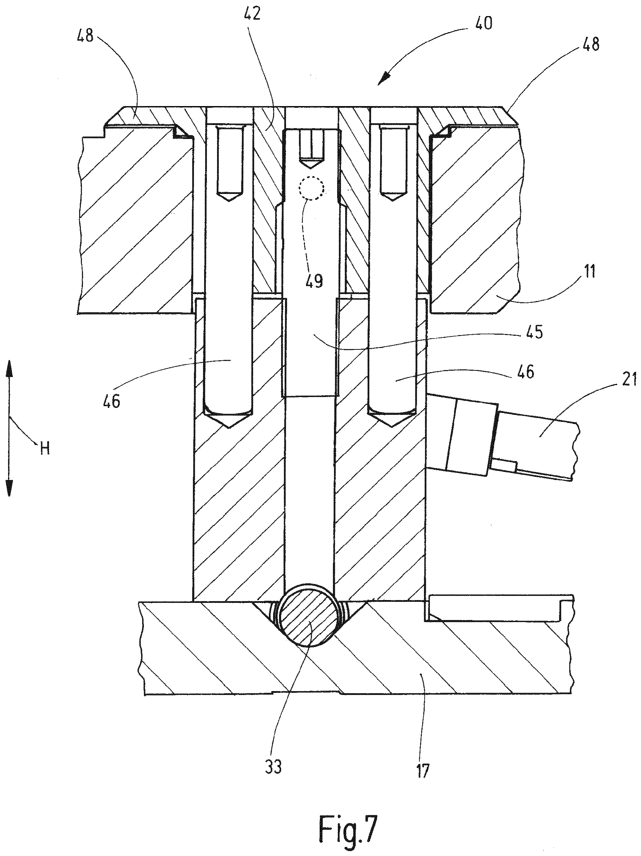

Das Anschlagteil 42 ist über eine Einstelleinrichtung 44 in Hubrichtung H verstellbar an der Säule 43 gelagert. Zur Einstelleinrichtung 44 gehört eine in Figur 7 dargestellte Differenzialschraube 45. Diese Differenzialschraube 45 verbindet das Anschlagteil 42 mit der Säule 43, so dass eine sehr genaue Justage des Abstandes zwischen dem Anschlagteil mit der Anschlagfläche 41 und dem Basisteil 17 möglich ist. Über zwei parallel zur Differenzialschraube 45 verlaufende Zapfen 46 ist das Anschlagteil 42 in Führungsaussparungen an der Säle 43 geführt. Zur Arretierung der eingestellten Position des Anschlagteiles 42 kann eine Spannschraube dienen, die sich quer zur Hubrichtung H erstreckt und die Position des Anschlagteiles 42 gegenüber der Säule 43 fixiert, beispielsweise in dem sie ein Verstellen bzw. Verdrehen der Differenzialschraube 45 verhindert.

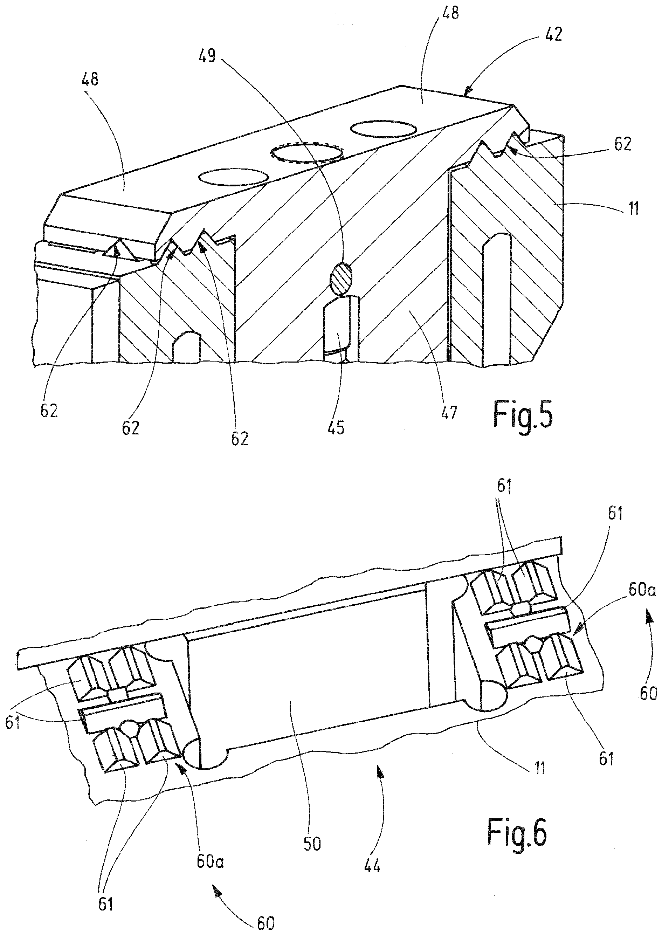

Die Darstellung in Figur 6 ist unvollständig und zeigt das Anschlagteil 42 nicht. Die Differenzialschraube 45 und die Zapfen 46 der Einstelleinrichtung 44 sind in Figur 7 dargestellt.

Das Anschlagteil 42 weist einen sich in Verlängerung der Säule 43 erstreckenden quaderförmigen Abschnitt 47 auf. An dem der Säule 43 abgewandten Ende erstrecken sich von diesem quaderförmigen Abschnitt 47 zwei Querteile 48 quer zur Hubrichtung H in entgegengesetzte Richtungen weg. Dadurch entsteht eine insgesamt T-förmige Gestalt des Anschlagteils 42. An jedem Querteil 48 ist auf der dem Basisteil 17 bzw. dem Hubteil 11 zugewandten Seite ein Abschnitt 41a der Anschlagfläche 41 vorgesehen. Die Anschlagfläche 41 ist somit nicht zusammenhängend, sondern besteht aus zwei voneinander beabstandeten Abschnitten 41a an jeweils einem Querteil 48.

In dem Hubteil 11 ist eine in Figur 6 veranschaulichte Aussparung 50 vorhanden. Durch diese Aussparung 50 ragt in der Ruhestellung R die Säule 43 und in der Arbeitsstellung A der quaderförmige Abschnitt 47 des Anschlagteiles 42 hindurch. In Figur 6 ist die Säule 43 und das Anschlagteil 42 zur besseren Darstellung nicht dargestellt. Die Säule 43 bzw. der quaderförmige Abschnitt 47 der Positioniereinrichtung 40 dienen nicht zur Führung des Hubteils 11 in Hubrichtung H, sondern durchgreifen dieses lediglich durch die Aussparung 50. Zwischen der Positioniereinrichtung 40 und dem Hubteil 11 kann im Bereich der Aussparung 50 ein Spalt vorhanden sein, so dass in der Ruhelage R des Hubteils 11 und während der Bewegung des Hubteils 11 in Hubrichtung H kein Führungskontakt zwischen der Positioniereinrichtung 40 und dem Hubteil 11 besteht.

Zur Führung des Hubteils 11 in Hubrichtung H dient eine Führungseinrichtung 55, die beim Ausführungsbeispiel zwei sich parallel zueinander in Hubrichtung H erstreckende Führungsschienen 56 aufweist. Diese werden von einem mit dem Hubteil 11 fest verbundenen Führungsteil 57 umgriffen.

Der Anschlagfläche 41 der Positioniereinrichtung 40 und beispielsgemäß des Anschlagteils 42 ist eine Anlagefläche 60 am Hubteil 11 zugeordnet, wobei die Anlagefläche 60 beim Ausführungsbeispiel durch einen Abschnitt der Anbringungsfläche 12 gebildet ist. Die Anlagefläche 60 ist besonders gut in Figuren 5 und 6 erkennbar. Entsprechend der Anschlagfläche 41 weist auch die Anlagefläche 60 zwei voneinander beabstandete getrennte Flächenabschnitte 60a auf, die jeweils einem Abschnitt 41a der Anschlagfläche 41 zugeordnet sind. Befindet sich das Hubteil 11 in seiner Arbeitsstellung A, liegt die Anlagefläche 60 an der Anschlagfläche 41 an.

Bei dem hier veranschaulichten bevorzugten Ausführungsbeispiel sind weder die Anlagefläche 60, noch die Anschlagfläche 41 als ebene Flächen ausgeführt, was in Abwandlung zum Ausführungsbeispiel auch möglich wäre. Beispielsgemäß ist die Anlagefläche 60 des Hubteils 11 an mehrere Positioniervorsprüngen 61 angeordnet. Jedem Positioniervorsprung 61 ist eine Positioniervertiefung 62 zugeordnet, wobei die Anschlagfläche 41 an diesen Positioniervertiefungen 62 vorhanden ist. In der Arbeitsstellung A des Hubteils 11 greift jeder Positioniervorsprung 61 in die zugeordnete Positioniervertiefung 62 ein.

Es wäre in Abwandlung zu der dargestellten Ausführung auch möglich die Anschlagfläche 41 entweder an Positioniervorsprüngen 61 oder an Positioniervorsprüngen 61 und Positioniervertiefungen 62 vorzusehen, wobei die Anlagefläche 60 entsprechend an zugeordneten Positioniervertiefungen 62 oder an Positioniervertiefungen 62 und Positioniervorsprüngen 61 ausgebildet sein kann.

Bei dem hier dargestellten Ausführungsbeispiel haben die Positioniervorsprünge 61 im Querschnitt gesehen eine prismenförmige und beispielsweise eine trapezförmige Gestalt. Sie verjüngen sich vom Hubteil 11 weg. Die zugeordneten Positioniervertiefungen 62 haben einen an die Querschnittsform der Positioniervorsprünge 61 angepassten Querschnitt, der beim Ausführungsbeispiel dreieckförmig gestaltet ist. Aufgrund des dreieckförmigen Querschnitts der Positioniervertiefungen 62 und des trapezförmigen Querschnitts der Positioniervorsprünge 61 verbleibt in der Arbeitsstellung A des Hubteils 11 am Grund jeder Positioniervertiefung 62 ein kleiner Freiraum gegenüber dem eingreifenden Positioniervorsprung 61, wie dies in Figur 5 zu erkennen ist. Das Anschlagteil 42 und das Hubteil 11 liegen lediglich an den jeweiligen Schrägflächen der Positioniervorsprünge 61 und der Positioniervertiefungen 62 aneinander an, die mithin die Anschlagfläche 41 bzw. die Anlagefläche 60 bilden.

Durch diese Ausgestaltung der Anlagefläche 60 und der Anschlagfläche 41 lässt sich eine sehr exakte Positionierung des Hubteils 11 gegenüber der Positioniereinrichtung 40 und beispielsgemäß gegenüber dem Anschlagteil 42 erreichen. Die prismenförmigen Positioniervorsprünge 61 erstrecken sich beim Ausführungsbeispiel rechtwinklig zur Hubrichtung H. Wenigstens einer der prismenförmigen Positioniervorsprünge 61 erstreckt sich beim Ausführungsbeispiel rechtwinklig zu den anderen Positioniervorsprüngen 61. Dadurch ist die Lage des Hubteils 11 in der Arbeitsstellung A radial zur Hubrichtung H durch die Positioniereinrichtung 40 genau vorgegeben.

Über die Fluidsteuereinheit 25 wird jeder Fluidzylinder 20 der beiden Antriebseinrichtungen 18 mit einem Fluiddruck beaufschlagt, so dass über die Kolbenstange 21 und die beiden Kniehebelgetriebe 22 das Hubteil 11 mit seiner Anlagefläche 60 gegen die Anschlagfläche 41 der Positioniereinrichtung 40 gedrückt wird. Die dabei auf das Hubteil 11 einwirkenden Querkräfte quer zur Hubrichtung H werden durch die Positioniervertiefungen 62 im Anschlagteil 42 abgestützt und wirken somit nicht auf die Führungseinrichtung 55. Sowohl in Hubrichtung H, als auch quer zur Hubrichtung H ist eine exakte Positionierung des Hubteils 11 in der Arbeitsstellung A erreicht. Diese Arbeitsstellung A kann mit sehr hoher Genauigkeit angefahren werden. Dadurch ist sichergestellt, dass beim automatischen Bewegen des Hubteils 11 zwischen seiner Ruhestellung R und seiner Arbeitsstellung A die auf dem Hubteil 11 angeordnete Stützeinheit 13 immer wieder sehr exakt die vorgegebene Sollposition zur Abstützung des zugeordneten Werkstücks einnimmt. Bei dem hier beschriebenen Ausführungsbeispiel kann das Hubteil 11 und mithin auch die Stützeinheit 13 bis auf einem Mirkometer genau in Hubrichtung H und quer dazu positioniert werden.

Dadurch, dass durch die Positioniereinrichtung 40 die Arbeitsstellung A derart vorgegeben ist, dass sich die beiden Kniehebel 22a, 22b eines Kniehebelgetriebes 22 außerhalb ihrer Strecklage befinden, kann über den zugeordneten Antrieb 19 eine ausreichende Kraft auf das Hubteil 11 ausgeübt werden, mit der das Hubteil 11 in der Arbeitsstellung A gegen die Anschlagfläche 41 der Positioniereinrichtung 40 gedrückt wird. Da der Kniegelenkwinkel α in der Arbeitsstellung A betragsmäßig groß ist, genügen zum Halten des Hubteils 11 in der Arbeitsstellung A übliche pneumatische Betriebsdrücke im Bereich von 5 bis 6 bar, wie sie in Fabrikhallen üblicherweise ohnehin zur Verfügung stehen.

Beim Bewegen des Hubteils 11 aus der Ruhestellung R in die Arbeitsstellung A nimmt beim gleichförmigen Ausfahren des Kolbenstange 21 die Geschwindigkeit des Hubteils 11 in Hubrichtung H mit zunehmendem Kniegelenkwinkel α ab. Dies ist deswegen vorteilhaft, da das Hubteil 11 trotz gleichförmig bewegter Kolbenstange 21 mit geringer Geschwindigkeit an der Anschlagfläche 41 der Positioniereinrichtung 40 anschlägt. Bei dem hier beschriebenen Ausführungsbeispiel wird die Hubgeschwindigkeit des Hubteils 11 weiter dadurch begrenzt, dass in den Fluidleitungen 24 Fluiddrosseln 24a eingesetzt sind (Figur 3).

Jede Antriebseinrichtung 18 oder zumindest eine der Antriebseinrichtungen 18 kann eine Sensoreinheit 65 zur Erfassung zumindest der Arbeitsstellung A und der Ruhestellung R des Hubteils 11 aufweisen. Bei dem hier beschriebenen Ausführungsbeispiel weist die Sensoreinheit 65 zwei Endlagenschalter 66 im betreffenden Fluidzylinder 20 auf, über den die Position der Kolbenstange 21 bzw. des im Zylindergehäuse gelagerten Kolbens erfasst und daher mittelbar die Arbeitsstellung A und die Ruhestellung R des Hubteils 11 festgestellt werden kann. Einer der Endlagenschalter 66 liefert bei Erreichen der Arbeitsstellung A ein erstes Sensorsignal S1. Bei Erreichen der Ruhestellung R liefert der jeweils andere Endlagenschalter 66 des Fluidzylinders 20 ein zweites Sensorsignal S2.

In der Ruhestellung R ist der Kniegelenkwinkel α relativ klein, so dass die von dem Antrieb 19 auf das Kniegelenk 31 des Kniehebelgetriebes 22 einwirkende Kraft nur eine geringe Kraftkomponente in Hubrichtung H erzeugt. Dies kann dazu führen, dass eine relativ große Antriebskraft erforderlich ist, um das Hubteil 11 aus der Ruhestellung R bewegen zu können. Um die Forderung nach relativ großen Antriebskräften über die Antriebseinheit 18 in der Ruhestellung R des Hubteils 11 zu vermeiden, ist bei der hier beschriebenen Hubvorrichtung 10 ein Hilfsantrieb 70 vorhanden. Der Hilfsantrieb 70 stellte eine Hilfskraft in Hubrichtung H zur Verfügung, die zumindest in der Ruhestellung R mittelbar oder unmittelbar auf das Hubteil 11 einwirkt. Über die Hilfskraft des Hilfsantriebs 70 wird daher die Hubbewegung des Hubteils 11 aus der Ruhestellung R heraus in Richtung der Arbeitsstellung A unterstützt.

Der Hilfsantrieb 70 weist einen deformierbaren Körper 71 auf, der in der Ruhestellung R deformiert und beispielsgemäß zusammengedrückt ist, wodurch er in der Ruhestellung R die Hilfskraft in Hubrichtung H bereitstellt. Als deformierbarer Körper 71 dient beim Ausführungsbeispiel eine Druck- oder Schraubenfeder 72, deren Längsachse sich in Hubrichtung H erstreckt. Die Druck- oder Schraubenfeder 72 ist im Bereich der Führungseinrichtung 55 parallel zu den Führungsschienen 56 angeordnet. Ihr eines Ende stützt sich am Basisteil 17 ab. Das entgegengesetzte Ende liegt an einem Stützteil 73 an, das beispielsgemäß unmittelbar am Hubteil 11 befestigt ist. Die von der Druck- oder Schraubenfeder 72 ausgeübte Federkraft in Hubrichtung H wird somit über das Stützteil 73 auf das Hubteil 11 ein.

Bei dem hier beschriebenen Ausführungsbeispiel liegt das Stützteil 73 über den gesamten Hubweg des Hubteils 11 an der Druck- oder Schraubenfeder 72 an. Die Federkraft bzw. Hilfskraft in Hubrichtung H nimmt daher über den gesamten Hubweg des Hubteils 11 zu bzw. ab. Dadurch werden Kraftsprünge durch den Hilfsantrieb 70 in Hubrichtung H vermieden.

Alternativ zu den hier beschriebenen Ausführungsbeispiel könnte der deformierbare Körper 71 auch von einer Blattfeder oder einem Elastomerkörper gebildet sein. Es wäre auch möglich, dass der deformierbare Körper 71 lediglich in einem bestimmten Kniegelenkwinkelbereich ausgehend von der Ruhestellung R in Kontakt mit dem Stützteil 73 oder einem anderen mit dem Hubteil 11 verbundenen Element steht. Allerdings können dabei Kraftsprünge der Hilfskraft in Hubrichtung H entstehen.

Die Erfindung betrifft eine Hubvorrichtung 10 mit einem in Hubrichtung H zwischen einer Ruhestellung R und einer Arbeitsstellung A linear bewegbaren Hubteil 11. Das Hubteil 11 trägt eine Stützeinheit 13 für ein Werkstück und/oder eine Spanneinheit für dieses Werkstück. Zum Bewegen des Hubteils 11 dient wenigstens eine Antriebseinrichtung 18 und insbesondere zwei Antriebseinrichtungen 18. Jede Antriebseinrichtung 18 weist ein Kniehebelgetriebe 22 auf, das einen schwenkbar am Hubteil 11 gelagerten ersten Kniehebel 22a und einen an einem Basisteil 17 gelagerten zweiten Kniehebel 22b aufweist. Die beiden Kniehebel 22a, 22b sind an einem gemeinsamen Kniegelenk 31 schwenkbar aneinander gelagert. An dem Kniegelenk 32 greift ein Antrieb 19 der Antriebseinheit 18 an. Eine Positioniereinrichtung 40 gibt die Position des Hubteils 11 in Hubrichtung H und insbesondere auch quer zur Hubrichtung H in der Arbeitsstellung A vor. Hierfür weist es vorzugsweise eine Anschlagfläche 41 auf, gegen die das Hubteil 11 über die wenigstens eine Antriebseinrichtung 18 in die Arbeitsstellung A gedrückt wird. In dieser Arbeitsstellung A ist der Kniegelenkwinkel α des Kniehebelgetriebes 22 kleiner als 180°, so dass sich die beiden Kniehebel 22a und 22b des Kniehebelgetriebes 22 außerhalb der Strecklage befinden.

### Bezugszeichnliste:

- 10: Hubvorrichtung
- 11: Hubteil
- 12: Anbringungsfläche
- 13: Stützeinheit
- 14: Stützteil
- 15: Stützausnehmung
- 16: Antriebsseite
- 17: Basisteil
- 18: Antriebseinrichtung
- 19: Antrieb
- 20: Fluidzylinder
- 21: Kobenstange
- 22: Kniehebelgetriebe
- 22a: erster Kniehebel
- 22b: zweiter Kniehebel
- 23: Fluidanschluss
- 24: Fluidleitung
- 24a: Drossel
- 25: Fluidsteuereinheit

- 30: Verbindungsstück
- 31: Kniegelenk
- 32: erste Achse
- 33: zweite Achse
- 34: Nadellager

- 40: Positioniereinrichtung
- 41: Anschlagfläche
- 41a: Abschnitt der Anschlagfläche
- 42: Anschlagteil
- 43: Säule
- 44: Einstelleinrichtung
- 45: Differenzialschraube
- 46: Zapfen
- 47: quaderförmiger Abschnitt
- 48: Querteil
- 49: Spannschraube
- 50: Aussparung

- 55: Führungseinrichtung
- 56: Führungsschiene
- 57: Führungsteil

- 60: Anlagefläche
- 60a: Flächenabschnitt der Anlagefläche
- 61: Positioniervorsprung
- 62: Positioniervertiefung

- 65: Sensoreinheit
- 66: Endlagenschalter

- 70: Hilfsantrieb
- 71: deformierbaren Körper
- 72: Druck- oder Schraubenfeder
- 73: Stützteil

- α: Kniegelenkwinkel
- A: Arbeitsstellung
- H: Hubrichtung
- R: Ruhestellung
- S1: erstes Sensorsignal
- S2: zweites Sensorsignal

## Patentansprüche

1. Hubvorrichtung (10),
mit einem in einer Hubrichtung (H) zwischen einer Arbeitsstellung (A) und einer Ruhestellung (R) bewegbaren Hubteil (11), an dem eine Stützeinheit (13) zum Abstützen und/oder eine Spanneinheit zum Einspannen eines Werkstücks angeordnet ist,
mit zumindest einer an einem Basisteil (17) angeordneten Antriebseinrichtung (18), die ein Kniehebelgetriebe (22) und einen mit dem Kniehebelgetriebe (22) gekoppelten Antrieb (19) aufweist, wobei das Kniehebelgetriebe (22) einen gelenkig mit dem Hubteil (11) verbundenen ersten Kniehebel (22a) und einen gelenkig mit dem Basisteil (17) verbundenen zweiten Kniehebel (22b) aufweist, die Kniehebel (22a, 22b) an einem Kniegelenk (31) miteinander verbunden sind,
**dadurch gekennzeichnet, dass** sie eine Positioniereinrichtung (40) aufweist, die die Arbeitsstellung (A) des Hubteils (11) derart vorgibt, dass sich die Kniehebel (22a, 22b) außerhalb ihrer Strecklage befinden und einen Kniegelenkwinkel (α) von kleiner als 180° einschließen,
wobei die Positioniereinrichtung (40), eine dem Hubteil (11) zugewandte Anschlagfläche (41) aufweist, die in der Arbeitsstellung (A) an einer Anlagefläche (60) des Hubteils (11) anliegt und
wobei die Positioniereinrichtung (40) eine Säule (43) aufweist, die sich ausgehend vom Basisteil (17) durch eine Aussparung (50) im Hubteil (11) erstreckt und an ihrem dem Basisteil (17) abgewandten Ende ein Anschlagteil (42) mit der Anschlagfläche (41) trägt.

2. Hubvorrichtung nach Anspruch 1,
**dadurch gekennzeichnet, dass** die Positioniereinrichtung (40) eine Einstelleinrichtung (44) zur Einstellung des Abstandes zwischen dem Basisteil (17) und der Anschlagfläche (41) aufweist.

3. Hubvorrichtung nach Anspruch 1 oder 2,
**dadurch gekennzeichnet, dass** an der Anschlagfläche (41) und/oder der Anlagefläche (60) wenigstens ein Positioniervorsprung (61) vorhanden ist, der mit einer zugeordneten Positioniervertiefung (62) an der jeweils anderen Fläche (60, 41) zusammenarbeitet.

4. Hubvorrichtung nach Anspruch 3,
**dadurch gekennzeichnet, dass** der wenigstens eine Positioniervorsprung (61) in die jeweils zugeordnete Positioniervertiefung (62) eingreift, wenn sich das Hubteil (11) in seiner Arbeitsstellung (A) befindet, so dass das Hubteil (11) über die Positioniereinrichtung (40) quer zur Hubrichtung (H) definiert positioniert ist.

5. Hubvorrichtung nach einem der vorhergehenden Ansprüche,
**dadurch gekennzeichnet, dass** zwei Antriebseinrichtungen (18) vorhanden sind.

6. Hubvorrichtung nach Anspruch 4 und 5,
**dadurch gekennzeichnet, dass** die Säule (43) der Positioniereinrichtung (40) zwischen den beiden Kniehebelgetrieben (22) angeordnet ist.

7. Hubvorrichtung nach einem der vorhergehenden Ansprüche,
**dadurch gekennzeichnet, dass** die wenigstens eine Antriebseinrichtung (18) einen ansteuerbaren Antrieb (19) oder einen manuell bedienbaren Antrieb aufweist.

8. Hubvorrichtung nach Anspruch 7,
**dadurch gekennzeichnet, dass** der ansteuerbare Antrieb von einem doppelt wirkenden Fluidzylinder (20) gebildet ist, dessen Kolbenstange (21) am Kniegelenk (31) des Kniehebelgetriebes (22) angreift.

9. Hubvorrichtung nach Anspruch 8,
**dadurch gekennzeichnet, dass** in den mit dem Fluidzylinder (20) verbundenen Fluidleitungen (24) eine Drossel (24a) angeordnet ist.

10. Hubvorrichtung nach Anspruch 8 oder 9,
**dadurch gekennzeichnet, dass** die wenigstens eine Antriebseinrichtung (18) eine Fluidsteuereinheit (25) aufweist, die dazu eingerichtet ist, den Fluidzylinder (20) auch dann mit einem Fluiddruck zu beaufschlagen, wenn sich das Hubteil (11) in seiner Arbeitsstellung (A) oder seiner Ruhestellung (R) befindet.

11. Hubvorrichtung nach einem der vorhergehenden Ansprüche,
**dadurch gekennzeichnet, dass** die wenigstens eine Antriebseinrichtung (18) eine Sensoreinheit (65) zur Erfassung der Arbeitsstellung (A) und/oder der Ruhestellung (R) aufweist.

12. Hubvorrichtung nach einem der vorhergehenden Ansprüche,
**dadurch gekennzeichnet, dass** ein Hilfsantrieb (70) mit einem deformierbaren Körper (71) vorhanden ist, der durch die Deformation des Körpers (71) in der Ruhestellung (R) des Hubteils (11) eine Hilfskraft zum Bewegen des Hubteils (11) aus der Ruhestellung (R) heraus bereitstellt.

13. Hubvorrichtung nach einem der vorhergehenden Ansprüche,
**dadurch gekennzeichnet, dass** das Hubteil (11) über eine Führungseinrichtung (55) in Hubrichtung (H) linear geführt ist.

## Claims

1. Lifting apparatus (10),
with a lifting part (11) which is movable in a lifting direction (H) between a working position (A) and a rest position (R), and on which a supporting unit (13) for supporting a workpiece and/or a clamping unit for clamping a workpiece is arranged, with at least one drive device (18) arranged on a base part (17) and having a toggle lever mechanism (22) and a drive (19) coupled to the toggle lever mechanism (22), wherein the toggle lever mechanism (22) comprises a first toggle lever (22a) connected pivotably to the lifting part (11) and a second toggle lever (22b) connected pivotably to the base part (17), the toggle levers (22a, 22b) being connected together at a toggle joint (31),
**characterized in that** it has a positioning device (40) which defines the working position (A) of the lifting part (11) such that the toggle levers (22a, 22b) are outside their extended position and enclose a toggle lever angle (α) of less than 180°, wherein the positioning device (40) has a stop face (41) which faces the lifting part (11) and in the working position (A) lies against a stop face (60) of the lifting part (11), and
wherein the positioning device (40) has a pillar (43) which, starting from the base part (17), extends through a recess (50) in the lifting part (11) and has a stop part (42) with the stop face (41) at its end facing away from the base part (17).

2. Lifting device according to claim 1, **characterized in that** the positioning device (40) comprises an adjustment device (44) for setting the distance between the base part (17) and the stop face (41).

3. Lifting device according to claim 1 or 2, **characterized in that** at least one positioning protrusion (61) is present on the stop face (41) and/or on the stop face (60) and cooperates with an assigned positioning depression (62) on the respective other face (60, 41).

4. Lifting device according to claim 3, **characterized in that** the at least one positioning protrusion (61) engages in the respective assigned positioning depression (62) when the lifting part (11) is in its working position (A), so that the lifting part (11) is positioned definedly by the positioning device (40) transversely to the lifting direction (H).

5. Lifting device according to any of the preceding claims, **characterized in that** two drive devices (18) are present.

6. Lifting device according to claim 4 and 5, **characterized in that** the pillar (43) of the positioning device (40) is arranged between the two toggle lever mechanisms (22).

7. Lifting device according to any of the preceding claims, **characterized in that** the at least one drive device (18) has an activatable drive (19) or a manually operable drive.

8. Lifting device according to claim 7, **characterized in that** the activatable drive is formed by a double-action fluid cylinder (20), the piston rod (21) of which acts on the toggle joint (31) of the toggle lever mechanism (22).

9. Lifting device according to claim 8, **characterized in that** a choke (24a) is arranged in the fluid lines (24) connected to the fluid cylinder (20).

10. Lifting device according to claim 8 or 9, **characterized in that** the at least one drive device (18) has a fluid control unit (25) which is configured to pressurize the fluid cylinder (20) with a fluid pressure when the lifting part (11) is in its working position (A) or its rest position (R).

11. Lifting device according to any of the preceding claims, **characterized in that** the at least one drive device (18) has a sensor unit (65) for detecting the working position (A) and/or the rest position (R).

12. Lifting device according to any of the preceding claims, **characterized in that** an auxiliary drive (70) with a deformable body (71) is provided, which by the deformation of the body (71) in the rest position (R) of the lifting part (11) provides an auxiliary force for moving the lifting part (11) out of the rest position (R).

13. Lifting device according to any of the preceding claims, **characterized in that** the lifting part (11) is guided linearly in the lift direction (H) via a guide device (55).

## Revendications

1. Dispositif de levage (10),
comprenant un élément de levage (11), pouvant être déplacé dans une direction de levage (H), entre une position de travail (A) et une position de repos (R), sur lequel est disposée une unité d'appui (13) pour l'appui et/ou une unité de serrage pour le serrage d'une pièce à usiner,
comprenant au moins un dispositif d'entraînement (18) qui est installé sur un élément de base (17) et présente un mécanisme à genouillère (22) et un moyen d'entraînement (1 9) accouplé au mécanisme à genouillère (22), le mécanisme à genouillère (22) présentant une première genouillère (22a), reliée de façon articulée à l'élément de levage (1 1), et une deuxième genouillère (22b) reliée de façon articulée à l'élément de base (17), les genouillères (22a, 22b) étant reliées l'une à l'autre par une articulation de genouillère (31),
**caractérisé en ce qu'**il présente un dispositif de positionnement (40) qui prédéfinit la position de travail (A) de l'élément de levage (11) de manière telle que les genouillères (22a, 22b) se trouvent à l'extérieur de leur position d'extension et forment un angle d'articulation de genouillère (α) inférieur à 180°,
le dispositif de positionnement (40) présentant une surface de butée (41) qui est tournée vers l'élément de levage (11) et, dans la position de travail (A), est appliquée contre une surface d'appui (60) de l'élément de levage (11), et
le dispositif de positionnement (40) présentant une colonne (43) qui, en partant de l'élément de base (17), s'étend à travers un évidement (50) dans l'élément de levage (1 1) et porte, à son extrémité éloignée de l'élément de base (17), un élément de butée (42) avec la surface de butée (41).

2. Dispositif de levage selon la revendication 1, **caractérisé en ce que** le dispositif de positionnement (40) présente un dispositif de réglage (44) destiné au réglage de la distance entre l'élément de base (17) et la surface de butée (41).

3. Dispositif de levage selon la revendication 1 ou 2, **caractérisé en ce qu'**il est prévu sur la surface de butée (41) et/ou la surface d'appui (60), au moins une saillie de positionnement (61) qui coopère avec un creux de positionnement (62) associé, prévu respectivement sur l'autre surface (60, 41).

4. Dispositif de levage selon la revendication 3, **caractérisé en ce que** la saillie de positionnement (61), au nombre d'au moins une, s'engage dans le creux de positionnement (62) respectivement associé, lorsque l'élément de levage (11) se trouve dans sa position de travail (A), de sorte que l'élément de levage (11) est positionné de manière définie, transversalement à la direction de levage (H), par l'intermédiaire du dispositif de positionnement (40).

5. Dispositif de levage selon l'une des revendications précédentes, **caractérisé en ce qu'**il est prévu deux dispositifs d'entraînement (18).

6. Dispositif de levage selon les revendications 4 et 5, **caractérisé en ce que** la colonne (43) du dispositif de positionnement (40) est placée entre les deux mécanismes à genouillère (22).

7. Dispositif de levage selon l'une des revendications précédentes, **caractérisé en ce que** le dispositif d'entraînement (18), au nombre d'au moins un, présente un moyen d'entraînement (19), susceptible d'être commandé, ou un moyen d'entraînement à actionnement manuel.

8. Dispositif de levage selon la revendication 7, **caractérisé en ce que** le moyen d'entraînement susceptible d'être commandé est constitué d'un vérin à fluide (20) à double effet dont la tige de piston (21) agit sur l'articulation de genouillère (31) du mécanisme à genouillère (22).

9. Dispositif de levage selon la revendication 8, **caractérisé en ce qu'**un élément d'étranglement (24a) est disposé dans les conduites de fluide (24) reliées au vérin à fluide (20).

10. Dispositif de levage selon la revendication 8 ou 9, **caractérisé en ce que** le dispositif d'entraînement (18), au nombre d'au moins un, présente une unité de commande de fluide (25) qui est agencée pour appliquer une pression de fluide au vérin à fluide (20), même lorsque l'élément de levage (11) se trouve dans sa position de travail (A) ou dans sa position de repos (R).

11. Dispositif de levage selon l'une des revendications précédentes, **caractérisé en ce que** le dispositif d'entraînement (18), au nombre d'au moins un, présente une unité à capteur (65) destinée à détecter la position de travail (A) et/ou la position de repos (R).

12. Dispositif de levage selon l'une des revendications précédentes, **caractérisé en ce qu'**il est prévu un moyen d'entraînement auxiliaire (70), doté d'un corps (71) déformable, qui, du fait de la déformation du corps (71) dans la position de repos (R) de l'élément de levage (11), fournit une force auxiliaire pour déplacer l'élément de levage (11) à partir de la position de repos (R).

13. Dispositif de levage selon l'une des revendications précédentes, **caractérisé en ce que** l'élément de levage (11) est guidé de façon linéaire dans la direction de levage (B), par l'intermédiaire d'un dispositif de guidage (55).
